# EUROPEAN PATENT APPLICATION

(11) **EP 1 826 232 A1**
(43) Date of publication of application: **29.08.2007**
(21) Application number: 06100795.1
(22) Date of filing: 24.01.2006
(51) Int. Cl.: C08J 7/04, D06F 37/28, A47L 15/42, D06F 58/20

(54) **Plastic components for household appliances**

(71) Applicant: Electrolux Home Products Corporation N.V., 1930 Zaventem (BE)
(72) Inventor: Krupicka, Andreas, 33170, Pordenone (IT); Breese, Kevin, 33080, Roveredo in Piano (Pordenone) (IT); Spizzo, Fabio, 33084, Cordenons (Pordenone) (IT); Pehrsson, Johan, 33170, Pordenone (IT)
(74) Representative: Giugni, Valter

(57) **Abstract**

A plastic component for household appliances, in particular a door, a window or a porthole for washing machines, dryers, dishwashers and like is made of an amorphous thermoplastic polymer and at least one surface of the component is protected with a hard coating, the finished component having good properties of transparency, as well as chemical, wear and thermal resistance.

## Description

The present invention relates to new transparent plastic components for household appliances exposed to aggressive service conditions including humidity, water, elevated temperatures, chemicals, mechanical contacts, in particular to a door, a window or a porthole for washing machines, dryers, dishwashers and like.

For cost and technical reasons such kind of components are today produced with glass. From a technical point of view, the poor wear, poor abrasion, poor erosion, poor scratch and poor mar resistance of commodity plastics has been the most important argument against a plastic solution tifi today. In addition, transparent plastics exhibit a limited chemical resistance, particularly in presence of mechanical stresses (as also experienced with plastic portholes in which cracks were initiated after some service life due to residual stresses in the injection point). Mechanical stresses in components can arise from manufacturing, in terms of moulding and assembly, or from service conditions. Most transparent commodity thermoplastics also suffer from staining, discoloration and poor dirt repellence.

On the other hand, there are severe drawbacks with being restricted, 30 for instance, to porthole solutions only in 3-D shaped glass. Firstly, it can be expensive to introduce new designed or simply bigger portholes, or windows, than the present sizes. This is against the current (and predicted future) consumer trend which is, in generai, toward machines with increased washing and/or drying capability, provided with larger drums and more transparent windows or portholes. In addition, it is against any efforts to improve the design of this component, in terms of process and assembly (labour cost) as well as with respect of performance (noise).
Furthermore, the weight of glass is an issue: parts of glass of the size of normal portholes or windows are heavy and this has a significant effect on logistics, handling and assembly.

Similar considerations can be made for the door or window of dishwashers, which are also subject to thermal, chemical and mechanical stresses when the machine is functioning. In particular, the dishwasher environment requires materials with exceptional resistance to stress cracking and to discoloration. Moreover, a transparent component will be attractive and can have a technical performance as a window or light guide.
Amorphous thermoplastic polymers are transparent but have poor resistance to chemical attack. In addition, their wear resistance is, with few exceptions, insufficient. Crystalline thermoplastic polymers, like polypropylene, offers excellent chemical resistance but cannot be made entirely transparent. Moreover, their resistance to wear, staining and discoloration is poor.

It is a main scope of the present invention to provide plastic components for household appliances made of a transparent plastic material that can withstand severe service conditions, in term of chemical attack, staining, discoloration, scratch, mar, abrasion, erosion, wear and thermal load (high temperatures).

It is another scope of the present invention to provide plastic components for household appliances that make additional possible features and functions, such as anti-fog and easy-clean properties, without affecting cost and performance significantly.
It is another scope of the invention to provide such a kind of components which allows a large freedom of design in order to adapt easily each component to a specific model of appliance.

These and others scopes of the invention are achieved with a plastic component as claimed in the attached claims.

The feature and advantages of a plastic component according to the present invention will be fully apparent from the following description, given by way of non-limiting example.

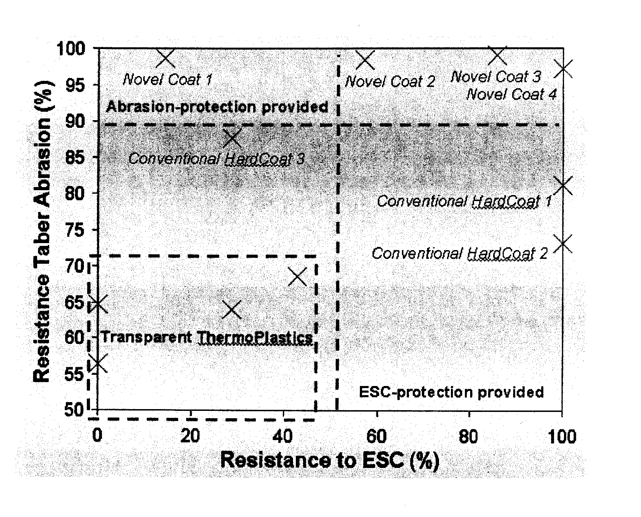

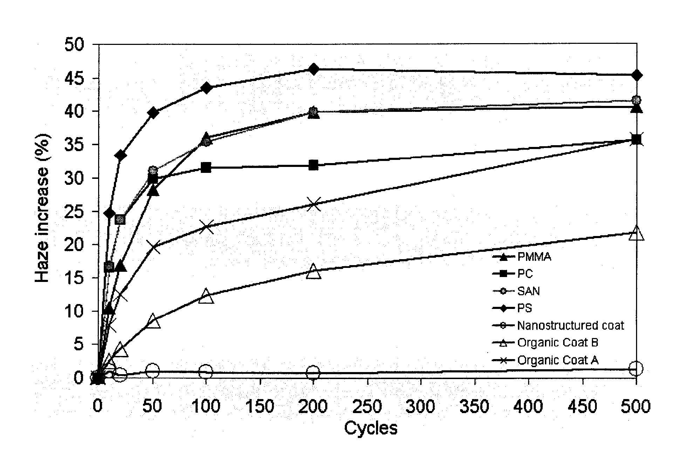

Figures 1 and 2 are diagram representations relevant to the comparison of plastic components coated with various coatings, in term of Taber abrasion, environmental stress cracking and particle wear.

A plastic component according to the present invention is made of an amorphous thermoplastic polymer, particularly of poly-(styrene-acrylonitrile) (SAN). The selection of this material as substrate material for the component involves three advantages: (i) it is less expensive, thus it provides a competitive cost for the final product, (ii) it allows well selected coatings to be applied without any pre-treatment, (iii) it exhibits higher modulus at ambient temperatures than other transparent commodity plastics.

Of course, it is also possible to use as substrate material a polymer from either of the following families: polyesters, styrenics, polycarbonates, acrylics, transparent polyamides.

The key of success is to balance the thermal properties of the coating to the elongation of the substrate. This is usually accompanied with reduced surface durability. However, a new class of nano-structured coatings offers satisfactorily flexibility to resist considerable substrate deformation without compromising wear and chemical resistance. The use of transparent plastic solution constituting a low-cost material, such as poly-(styrene-acrylonitrile), as substrate in combination with this type of hard coating, provides a surface with superior wear and chemical resistance compared with other plastics and comparable wear resistance compared to glass. This solution makes it easier to improve the overall design of components for household appliances, such as portholes for washing machines and tumbie dryers, or windows and doors for dishwashers.

With recent advances in coating technology and by the use of nano- structured materials, it is now possible to obtain coatings which can provide "added value" to the products in terms of additional feature, such as easy-clean and anti-fog properties without significantly increasing the final cost. Furthermore and more importantly, the possibility to produce transparent parts in plastics that can resist heavy service conditions open up the door to more cost-efficient design solutions. For instance, the current porthole design for washing machines consisting of 4-5 larger parts, one being the 3D- shaped glass and the rest plastic, could be replaced. The whole component can be produced in one plastic piece (possibly two) and thus minimising the need for assembly. Besides associated cost benefits, it is also likely that such one-piece component in plastic could involve significant noise reduction compared to the present solution consisting of several assembled parts.

Various attempts to improve current porthole design by the use of opacifying agent or improved process solutions have been disclosed in the past. See, GB 941134, DE 1585607, GB 2237393. However, the main scope of the relevant solutions is to improve the aesthetic appearance of the component.

According to the present porthole solution also improvements similar o these could be carried out without associated trade-offs in terms of 20 performance or cost.

However, the main advantage of the new component is the possibility to produce it by using a conventional plastic processing technique, like injection moulding, multi-component injection moulding, blow-moulding or gas injection moulding. This results in a total freedom of design to adapt easily each component to any specific type and model of appliance.

For plasma-polymerised nano-structured coatings, a batch-wise procedure has to be used for the coating treatment; said procedure may make this type of coating less attractive for large-size objects. However, radiation curing technologies, like UV, have become available for another type of nano-structured coatings and the coating resin is solvent-borne. Hence, the coating can be applied and cured using conventional in-line continuous procedures, like dip-coating, flow coating and spraying.

The following commercial or developmental coatings (here mentioned as non-limiting examples) have been found applicable for components of household appliances made in SAN: Genthe-X x-protect KR 3611 (UV process technology), GE Bayer Silicones UVHC GP 8v UVHC 7000 (UV process technology), Dow VPP (Plasma technology), PPG D8105 CeramiClear TM Deltron (2K process technology).

Examples of surface improvement, in terms of wear resistance and resistance to environmental stress cracking (ESC), using coatings tailored to fit substrate-coating interactions and the demands on improved service performance, in given applications, of SAN is represented in Figure 1. The wear resistance was measured using a Taber Abraser standard test.

Examples of surface improvement in terms of wear resistance using coatings tailored to fit substrate-coating interactions and the demands on improved service performance, in given applications, of SAN is represented in Figure 2.

The particle wear resistance was obtained using an internal standard test developed by the owner of the present application to simulate wear during wet service conditions (See, the co-pending patent application no. EP 05 106722.1).

Moreover, by using multifunctional coatings, there is the possibility to add new features, such as easy-clean and anti-fog properties, to the plastic component.

Coatings are generally applied to the surface of the component that is directly exposed to the service conditions of the appliance, but it is apparent that the whole surface of the component may be uniformly coated.

While the above description is referred to some specific components for appliances, it is intended that the present invention is adapted to be used in any case wherein a glass component can be substituted by using a plastic assembly having similar characteristics of transparency and thermal, scratch, mar, abrasion, erosion, wear and chemical resistance.

## Claims

1. A plastic component for household appliances, in particular a door, a window or a porthole for washing machines, dryers, 5 dishwashers and like,
**characterised in that**
the component is made of an amorphous thermoplastic polymer and at least one surface of the component is protected with a hard coating, the finished component having good properties of transparency, as well as chemical, wear and thermal resistance.

2. A plastic component for household appliances according to claim 1, **characterised in that** the amorphous thermoplastic polymer is poly-styrene-acrylonitrile (SAN) or a polymer from either of foliowing families: polyesters, styrenics, polycarbonates, acrylics, transparent polyamides.

3. A plastic component for household appliances according to claim 1 or 2, **characterised in that** the hard coating is a plasma-deposited coating.

4. A plastic component for household appliances according to claim 1 or 2, **characterised in that** the hard coating consists of material derived from sol-gel technology.

5. A plastic component for household appliances according to claim 1 or 2, **characterised in that** the hard coating consists 25 of nanostructured material.

6. A plastic component for household appliances according to claim 1 or 2, **characterised in that** the hard coating is a radiation curable coating.

7. A plastic component for household appliances according to claim 1 or 2, **characterised in that** the hard coating is a thermally curable coating.

8. A plastic component for household appliances according to claim 1 or 2, **characterised in that** the hard coating is a physically drying coating.

9. A plastic component for household appliances according to claim 1 or 2, **characterised in that** the hard coating is obtained by a surface treatment that modifies the surface properties of a thermoplastic surface such as SAN.

## Amended claims

### Amended claims in accordance with Rule 86(2) EPC.

**1.** A plastic component for household appliances, in particular a door, a window or a porthole for washing machines, dryers, 5 dishwashers and like,
**characterised in that**
the component is made of an amorphous thermoplastic polymer and at least one surface of the component is protected with a hard coating, the finished component having good properties of transparency, as well as chemical, wear and thermal resistance.

**2.** A plastic component for household appliances according to claim 1, **characterised in that** the amorphous thermoplastic polymer is poly-styrene-acrylonitrile (SAN) or a polymer from either of foliowing families: polyesters, styrenics, polycarbonates, acrylics, transparent polyamides.

**3.** A plastic component for household appliances according to claim 1 or 2, **characterised in that** the hard coating is a plasma-deposited coating.

**4.** A plastic component for household appliances according to claim 1 or 2, **characterised in that** the hard coating consists of material derived from sol-gel technology.

**5.** A plastic component for household appliances according to claim 1 or 2, **characterised in that** the hard coating consists 25 of nanostructured material.

**6.** A plastic component for household appliances according to claim 1 or 2, **characterised in that** the hard coating is a radiation curable coating.

**7.** A plastic component for household appliances according to claim 1 or 2, **characterised in that** the hard coating is a thermally curable coating.

**8.** A plastic component for household appliances according to claim 1 or 2, **characterised in that** the hard coating is a physically drying coating.
